(19) Europäisches Patentamt
European Patent Office
Office européen des brevets

(11) Publication number: 0 341 011
A1

(12) # EUROPEAN PATENT APPLICATION

(21) Application number: 89304376.0

(22) Date of filing: 02.05.89

(51) Int. Cl.4: A 01 N 47/36
//(A01N47/36,47:36)

(30) Priority: 03.05.88 US 189813 13.02.89 US 309639
28.03.89 US 329931

(43) Date of publication of application:
08.11.89 Bulletin 89/45

(84) Designated Contracting States: ES GR

(71) Applicant: E.I. DU PONT DE NEMOURS AND COMPANY
1007 Market Street
Wilmington Delaware 19898 (US)

(72) Inventor: Liang, Paul Hsaio-Tseng
3428 Pebble Beach Drive
Wilmington Delaware 19808 (US)

(74) Representative: Hildyard, Edward Martin et al
Frank B. Dehn & Co. European Patent Attorneys Imperial
House 15-19 Kingsway
London WC2B 6UZ (GB)

(54) **Herbicidal pyridinesulfonylureas.**

(57) A herbicidal mixture of compounds consisting essentially of an effective amount of (N-[[(4,6-dimethoxy-2-pyrimidinyl)amino]carbonyl]-3-(ethylsulfonyl)-2-pyridinesulfonamide I
and at least one compound selected from (2-[[[[(4,6-dimethoxy-2-pyrimidinyl)amino]-carbonyl]amino]sulfonyl]-N,N-dimethyl-3-pyridinecarboxamide II
and
(methyl 3-[[[[(4-methoxy-6-methyl-1,3,5-triazin-2-yl)-amino]carbonyl]amino]sulfonyl]-2-thiophenecarboxylate III
and their agriculturally suitable salts.

EP 0 341 011 A1

## Description

## HERBICIDAL PYRIDINESULFONYLUREAS

### Related Applications

This application is a continuation-in-part of my copending application U.S. Serial No. 309,639, filed February 13, 1989, which in turn is a continuation-in-part of my copending application, U.S. Serial No. 189,813, filed May 3, 1988, which is a continuation-in-part of my copending application, U.S. Serial No. 101,148, filed September 25, 1987, which is a continuation-in-part of U.S. Serial No. 39,491, filed April 16, 1987, which in turn is a continuation-in-part of my application U.S. Serial No. 939,428, filed December 8, 1986.

### Background of the Invention

Pyridinesulfonylureas of the instant application show high activity as preemergence and postemergence herbicides. In particular, safety to corn is demonstrated by the herbicides.

EP-A-13,480 discloses herbicidal sulfonamides of the formula

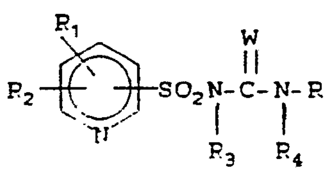

wherein

$R_1$ is H, Cl, Br, F, $C_1$-$C_4$ alkyl, $C_1$-$C_4$ alkoxy, $C_1$-$C_4$ alkylthio, $NO_2$ or $CO_2R_5$.

U.S 4,789,393, U.S. 4,786,734, and EP-A-232,067 name

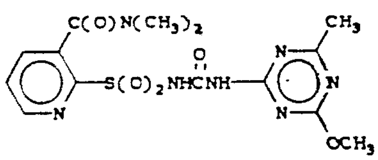

and describe its use as a herbicide, particularly in corn.

U.S. 4,481,029 names

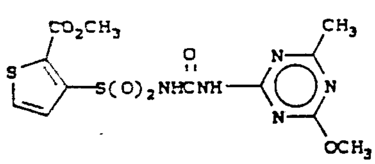

and describes its use as a herbicide.

### Summary of the Invention

This invention comprises novel herbicidal mixtures particularly for the control of undesired vegetation in a crop of corn.

In particular, this invention comprises novel herbicidal mixtures consisting of the compound of Formula I together with at least one other herbicidal compound, particularly the compounds of Formulae II and III, agriculturally suitable compositions containing them, and their method-of-use as preemergence and/or postemergence herbicides or plant growth regulants, particularly for the control of undesired vegetation in a crop of maize (corn).

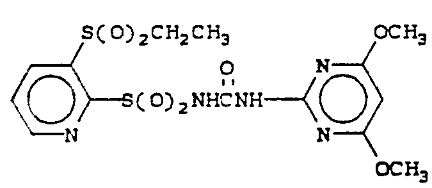

I

(N-[[4,6-dimethoxy-2-pyrimidinyl)amino]-carbonyl]-3-(ethylsulfonyl)-2-pyridinesulfonamide alternatively named N-[(4,6-dimethoxypyrimidin-2-yl)aminocarbonyl]-3-(ethylsulfonyl)-2-pyridinesulfonamide)

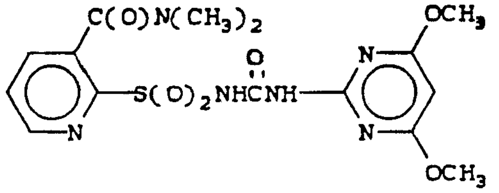

II

(2-[[[[4,6-dimethoxy-2-pyrimidinyl)amino]-carbonyl]amino]sulfonyl]-N,N-dimethyl-3-pyridinecarboxamide alternatively named. 2-[[4,6-dimethoxypyrimidin-2-yl)aminocarbonyl] aminosulfonyl]-N,N-dimethyl-3-pyridinecarboxamide)

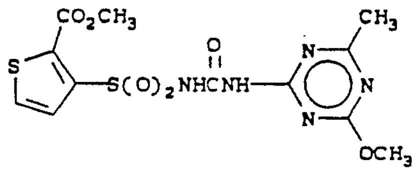

III

(methyl 3-[[[[(4-methoxy-6-methyl-1,3,5-triazin-2-yl)amino]carbonyl]amino]sulfonyl]-2-thio-phenecarboxylate alternatively named methyl 3[[(4-methoxy-6-methyl-1,3,5-triazin-2-yl)aminocarbonyl]aminosulfonyl]-2-thiophenecarboxylate) and their agriculturally suitable salts.

Preferred for reasons of better weed control efficacy and/or safety to maize are:

1) Mixtures of the compound of Formula I with the compound of Formula II in about a 2 : 1 to 1 : 2 ratio by weight, respectively.

2) The mixture of Preferred 1, wherein the weight ratio of compounds present is about 1 : 1, respectively.

3) Mixtures of the compound of Formula I with the compound of Formula II and the compound of Formula III in about 5 : 5 : 1 to 4 : 1 : 1 ratio by weight, respectively.

4 ) The mixture of Preferred 3, wherein the weight ratio of compounds present is about 4 : 4 : 1, respectively.

5) Mixtures of compound of Formula I with the compound of Formula III in about a 3 : 1 to 1 : 1 ratio by weight, respectively.

6) The mixture of Preferred 5, wherein the weight ratio of compounds present is about 2 : 1, respectively.

## DETAILED DESCRIPTION OF THE INVENTION

### Synthesis

The compound of Formula I can be synthesized by one or more of the methods described or referenced in WO 88/04297 (published June 16, 1988) or U.S. Patent No. 4,774,337. Examples are shown in Equations 1 and 2 for the preparation of N-[[(4,6-dimethoxy-2-pyrimidinyl)amino]carbonyl]-3-(ethylsulfonyl)-2-pyridinesulfonamide (I).

The reaction of sulfonamide 1 with the phenyl ester of the appropriate carbamic acid 2 in the presence of an equimolar quantity of a tertiary amine base such as 1,8-diazobicyclo[5.4.0]undec-7-ene (DBU) is shown in Equation 1.

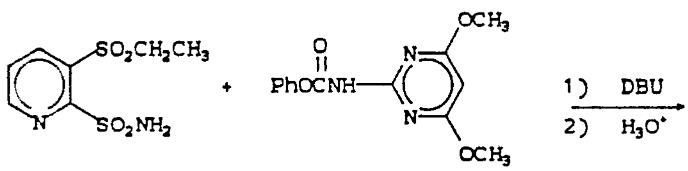


1 2

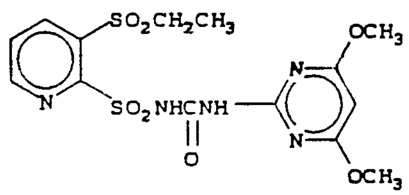

I

The reaction shown in Equation 1 is best carried out at 25° C in a solvent such as dioxane or acetonitrile for 1-2 hours under an inert atmosphere as described in European Patent Application No. 70,804 (published January 26, 1983). The desired product of Formula I can be conveniently isolated by acidifying the reaction solution with aqueous hydrochloric acid. Alternatively, the aqueous layer can be extracted with a solvent such as methylene chloride or ethyl acetate. Drying and evaporation of the solvent affords the desired product. The phenyl carbamate can be synthesized by treatment of the corresponding aminopyrimidine with diphenyl carbonate or phenyl chloroformate in the presence of a base such as sodium hydride, pyridine, or potassium carbonate with a catalytic amount of 4-dimethylaminopyridine. The mixture is stirred at temperatures between 25° and 65° C in a suitable solvent such as tetrahydrofuran for 12-36 hours.

The compound of Formula I can also be synthesized by the reaction of the appropriate arylsulfonylcarbamate of Formula 4 with the aminopyrimidine 5 as shown in Equation 2. This reaction can be carried out in the presence of various bases as described for Equation 1, or by simply refluxing in an appropriately high boiling solvent such as dioxane. The arylsulfonylcarbamate 4 can be synthesized by the reaction of sulfonamide 1 with phenyl or alkyl carbonates (or the corresponding chloroformates) in the presence of a variety of bases.

Equation 2

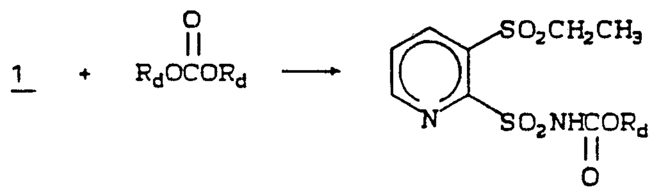

3 4

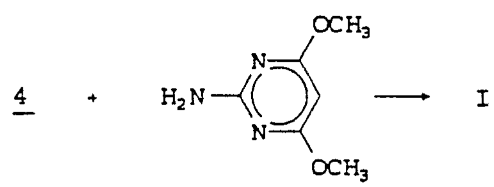

5

wherein

$R_d$ is phenyl or $C_1$-$C_4$ alkyl.

The synthesis of the compound of Formula I is further illustrated in Examples 1 to 6.

Example 1

Preparation of 3-ethylthio-2-fluoropyridine

To a stirred solution of 236 ml (0.452 mol) of 1.9 molar lithium diisopropylamide (in hexanes) in 600 mls dry tetrahydrofuran cooled to -70° under nitrogen was added dropwise a solution of 40.0 g of 2-fluoropyridine (0.412 mol) in 100 mls dry tetrahydrofuran such that the temperature was maintained below -65°. The solution was stirred at -70° for 4 hours and a solution 55.1 g of ethyl disulfide (0.452 mol) in 150 mls dry tetrahydrofuran was added dropwise while maintaining the temperature below -65°. After stirring another 2 hours at -70°, the solution was poured into water and extracted with methylene chloride. The combined organic phases were washed with brine, dried over magnesium sulfate, and evaporated to afford crude product. This was purified by flash chromatography using 95:5 petroleum ether-ether as eluent to give 46.5 g (72%) of the title compound as an oil: NMR ($CDCl_3$, 200 MHz), 1.3 (3H, t, J = 7 Hz), 2.95 (2H, q, J = 7 Hz), 7.1 (1H, m) 7.7 (1H, m), 8.0 (1H, m); IR (neat) 1585, 1565, 1410, 1230 $cm^{-1}$.

Example 2

Preparation of 3-ethylthio-2-(phenylmethylthio)-pyridine

To a stirred suspension of 8.6 g (0.18 mol) of 50% sodium hydride (in mineral oil), which had been washed with hexanes, in 200 mls dry dimethylformamide cooled to -5° under nitrogen was added dropwise 22.7 g (0.18 mol) benzyl mercaptan such that the temperature was maintained below 5°. The suspension was stirred at room temperature for 1 hour, cooled to 0°, and a solution of 25.0 g (0.160 mol) of the product from Example 1 was added dropwise while maintaining the temperature between 0° and 5°. After warming to room temperature, the solution was poured into water and extracted with ether. The combined organic layers were washed with water and with brine, dried over magnesium sulfate, and evaporated to give 44.8 g (100%) of the title compound as a yellow liquid: NMR ($CDCl_3$, 200 MHz), 1.28 (3H, t, J = 7 Hz), 2.9 (2H, q, J = 7 Hz), 4.45 (2H, s), 7.0-7.6 (7H, m), 8.35 (1H, m); IR (neat) 1610, 1405 $cm^{-1}$.

## Example 3

Preparation of N-(1,1-dimethylethyl)-3-ethylsulfinyl-2-pyridinesulfonamide

To a vigorously stirred mixture of 35.0 g (0.134 mol) of the product from Example 2 in 650 mls methylene chloride and 375 mls water cooled to 0° was added 63 mls (0.72 mol) concentrated hydrochloric acid followed by the dropwise addition of 650 mls (0.44 mol) of a 5% sodium hypochlorite solution such that the temperature was maintained between 0° and 5°. After the mixture was stirred for an additional 30 minutes at 0° the reaction was poured into water and extracted with methylene chloride. The combined organic layers were washed with brine, dried over magnesium sulfate, and filtered. The filtrate was stirred and cooled to -70° under nitrogen and 49 g (0.67 mol) of t-butyl amine was added dropwise and the mixture was allowed to warm to room temperature. The reaction was poured into water and extracted with methylene chloride. The organic layers were combined and washed with brine, dried over magnesium sulfate, and evaporated which was washed with ether to leave 21.2 g (56%) of the title compound as a tan solid:
m.p. 129-131°; NMR ($CDCl_3$, 200 MHz) 1.23 (9H, s), 1.28 (3H, t, J = 7 Hz), 2.9 (1H, m), 3.3 (IH, m), 5.2 (NH), 7.7 (1H, m), 8.55 (1H, m), 8.75 (1H, m); IR (nujol) 3100, 1320, 1155 $cm^{-1}$.

## Example 4

Preparation of N-(1,1-dimethylethyl)-3-ethylsulfonyl-2-pyridinesulfonamide

To a stirred solution of 9.0 g (0.033 mol) of the product from Example 3 in 400 mls methylene chloride cooled to -5°, under nitrogen, was added 6.8 g (0.039 mol) of 3-chloroperbenzoic acid and stirred at room temperature for about 20 hours. The reaction mixture was poured into water and extracted with methylene chloride. The organic layers were combined and washed with saturated sodium bisulfite and brine, dried over magnesium sulfate, and evaporated to a solid mixture. This was slurried in 1-chlorobutane, the solid discarded, and the filtrate evaporated. The residue was purified by flash chromatography using 2:1 then 1:1 petroleum ether-ethyl acetate as eluent to give 10.1 g (100%) of the title compound: m.p. 58-63°; NMR ($CDCl_3$, 200 MHz) 1.2 (3H, t, J = 7 Hz), 1.2 (9H, s), 3.7 (2H, q, J = 7 Hz) 6.1 (NH), 7.7 (1H, m) 8.55 (1H, m) 8.95 (1H, m); IR (nujol) 3300, 1560, 1350, 1300, 1170, 1140 $cm^{-1}$.

## Example 5

Preparation of 3-ethylsulfonyl-2-pyridinesulfonamide

9.0 g (0.029 mol) of the product from Example 4 was dissolved and stirred in 125 mls trifluoroacetic acid for about 72 hours. The solution was evaporated and triturated with ether to afford 4.2 g (58%) of the title compound: m.p. 211-212.5°; NMR (DMSO-$d_6$, 200 MHz), 1.15 (3H, t, J = 7 Hz), 3.4 ($NH_2$), 3.7 (2H, q, J = 7 Hz). 7.9 (1H, m), 8.5 (1H, m), 8.95 (1H, m); IR (nujol) 3370, 3190, 1350, 1310, 1180 $cm^{-1}$.

## Example 6

Preparation of (N-[[4,6-dimethoxy-2-pyrimidinyl)amino]-carbonyl]-3-(ethylsulfonyl)-2-pyridinesulfonamide

To a stirred suspension of 0.60 g (0.0024 mol) of the product from Example 5 and 0.90 g (0.0034 mol) of phenyl (4,6-dimethoxypyrimidin-2-yl)carbamate in 5 mls acetonitrile was added 0.52 g (0.0034 mol) of 1,8-diazabicyclo[5.4.0]undec-7-ene and stirred for 15 minutes. The solution was diluted with water and acidified with 1 normal hydrochloric acid. The resulting precipitate was collected and washed with water and ether to give 0.70 g (70%) of the title compound: m.p. 160-162°: NMR ($CDCl_3$, 200 MHz) 1.35 (3H, t, J = 7 Hz), 3.7 (2H, q, J = 7 Hz), 3.97 (6H, s), 5.8 (1H, s), 7.3 (NH), 7.75 (1H, m) 8.6 (1H, m), 8.9 (1H, m) 12.95 (NH); IR (nujol) 3260, 1740, 1610, 1360, 1195, 1175 $cm^{-1}$.

In the above Examples temperatures are reported in degrees Celsius; abbreviations for nuclear magnetic resonance (NMR) are: s = singlet, d = doublet, t = triplet, m = multiplet, and peak positions are reported as parts per million downfield from internal tetramethylsilane. Infrared (IR) peak positions are given in reciprocal centimeters ($cm^{-1}$).

The compound of Formula II can be prepared as described in U.S. 4,789,393 and U.S. 4,786,734.

The compound of Formula III can be prepared by methods described in U.S. 4,481,029. It is sold by E. I. du Pont de Nemours and Company as the active ingredient in Harmony® herbicide.

Mixtures of agriculturally suitable salts of the compounds of Formulae I, II and III are also useful for the selective control of undesired vegetation in maize crops and can be prepared in a number of ways known to

the art. For example, metal salts can be made by contacting the compounds of Formulae I, II and III with a solution of an alkali or alkaline earth metal salt having a sufficiently basic anion (e.g., hydroxide, alkoxide, carbonate or hydroxide). Quaternary amine salts can be made by similar techniques.

Salts of the compounds of Formulae I, II and III can also be prepared by exchange of one cation for another. Cationic exchange can be effected by direct contact of an aqueous solution of a salt of a compound of Formulae I, II or III (e.g., alkali or quaternary amine salt) with a solution containing the cation to be exchanged. This method is most effective when the desired salt containing the exchanged cation is insoluble in water and can be separated by filtration.

Exchange may also be effected by passing an aqueous solution of a salt of a compound of Formulae I, II or III (e.g., an alkali metal or quaternary amine salt) through a column packed with a cation exchange resin containing the cation to be exchanged for that of the original salt and the desired product is eluted from the column. This method is particularly useful when the desired salt is water-soluble, e.g., a potassium, sodium or calcium salt.

Acid addition salts, useful in this invention, can be obtained by reacting compounds of Formulae I, II and III with a suitable acid, e.g., p-toluene-sulfonic acid, trichloroacetic acid or the like.

## Formulations

Useful formulations of the compound of Formula I and its mixtures with other active herbicides, such as the compounds of Formulae II and III, can be prepared in conventional ways. They include dusts, granules, pellets, solutions, suspensions, emulsions, wettable powders, emulsifiable concentrates and the like. Many of these may be applied directly. Sprayable formulations can be extended in suitable media and used at spray volumes of from a few liters to several hundred liters per hectare. High strength compositions are primarily used as intermediates for further formulation. The formulations, broadly, contain about 0.1% to 99% by weight of active ingredient(s) and at least one of (a) about 0.1% to 20% surfactant(s) and (b) about 1% to 99.9% solid to liquid inert diluent(s). More specifically, they will contain these ingredients in the following approximate proportions:

| | Weight Percent* | | |
|---|---|---|---|
| | Active Ingredient | Diluent(s) | Surfactant(s) |
| Wettable Powders | 20-90 | 0-74 | 1-10 |
| Oil Suspensions, Emulsions, Solutions, (including Emulsifiable Concentrates) | 3-50 | 40-95 | 0-15 |
| Aqueous Suspension | 10-50 | 40-84 | 1-20 |
| Dusts | 1-25 | 70-99 | 0-5 |
| Granules and Pellets | 0.1-95 | 5-99.9 | 0-15 |
| High Strength Compositions | 90-99 | 0-10 | 0-2 |

* Active ingredient plus at least one of a Surfactant or a Diluent equals 100 weight percent.

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Typical solid diluents are described in Watkins, et al., "Handbook of Insecticide Dust Diluents and Carriers", 2nd Ed., Dorland Books, Caldwell, New Jersey, but other solids, either mined or manufactured, may be used. The more absorptive diluents are preferred for wettable powders and the denser ones for dusts. Typical liquid diluents and solvents are described in Marsden, "Solvents Guide," 2nd Ed., Interscience, New York, 1950. Solubility under 0.1% is preferred for suspension concentrates; solution concentrates are preferably stable against phase separation at 0°C. "McCutcheon's Detergents and Emulsifiers Annual", MC Publishing Corp., Ridgewood, New Jersey, as well as Sisely and Wood, "Encyclopedia of Surface Active Agents", Chemical Publishing Co., Inc., New York, 1964, list surfactants and recommended uses. All formulations can contain minor amounts of additives to reduce foaming, caking, corrosion, microbiological growth, etc.

The methods of making such compositions are well known. Solutions are prepared by simply mixing the ingredients. Fine solid compositions are made by blending and, usually, grinding as in a hammer or fluid energy mill. Suspensions are prepared by wet milling (see, for example, Littler, U.S. Patent 3,060,084). Granules and pellets may be made by spraying the active material upon preformed granular carriers or by agglomeration

techniques. See J. E. Browning, "Agglomeration", Chemical Engineering, December 4, 1967, pp. 147ff. and "Perry's Chemical Engineer's Handbook", 5th Ed., McGraw-Hill, New York, 1963, pp. 8-57ff.

For further information regarding the art of formulation, see for example:

H. M. Loux, U.S. Patent 3,235,361, February 15, 1966, Col. 6, line 16 through Col. 7, line 19 and Examples 10 through 41;

R. W. Luckenbaugh, U.S. Patent 3,309,192, March 14, 1967, Col. 5, line 43 through Col. 7, line 62 and Examples 8, 12, 15, 39, 41, 52, 53, 58, 132, 138-140, 162-164, 166, 167 and 169-182;

H. Gysin and E. Knusli, U.S. Patent 2,891,855, June 23, 1959, Col. 3, line 66 through Col. 5, line 17 and Examples 1-4;

G. C. Klingman, "Weed Control as a Science", John Wiley and Sons, Inc., New York, 1961, pp. 81-96; and

J. D. Fryer and S. A. Evans, "Weed Control Handbook", 5th Ed., Blackwell Scientific Publications, Oxford, 1968, pp. 101-103.

In the following examples, all parts are by weight unless otherwise indicated.

## Example 7

High Strength Concentrate

| | |
|---|---|
| Compound of Formula I | 44.5% |
| Compound of Formula II | 44.5% |
| trimethylnonyl polyethylene glycol ether | 1% |

The surfactant is sprayed upon the active ingredient in a blender and the mixture sifted through a U. S. S. no. 40 sieve (0.42 mm openings) prior to packaging. The concentrate may be formulated further for practical use.

## Example 8

Wettable Powder

| | |
|---|---|
| Compound of Formula I | 29% |
| Compound of Formula II | 29% |
| Compound of Formula III | 7% |
| dodecylphenol polyethylene glycol ether | 2% |
| sodium ligninsulfonate | 4% |
| sodium silicoaluminate | 6% |
| montmorillonite (calcined) | 23% |

The ingredients are thoroughly blended. The liquid surfactant is added by spraying upon the solid ingredients in the blender. After grinding in a hammer mill to produce particles essentially all below 100 microns, the material is reblended and sifted through a U.S.S. No. 50 sieve (0.3 mm opening) and packaged.

## Example 9

Aqueous Suspension

| | |
|---|---|
| Compound of Formula I | 33.3% |
| Compound of Formula III | 16.7% |
| polyacrylic acid thickener | 0.3% |
| dodecylphenol polyethylene glycol ether | 0.5% |
| disodium phosphate | 1% |
| monosodium phosphate | 0.50% |
| polyvinyl alcohol | 1.0% |
| water | 56.7% |

The ingredients are blended and ground together in a sand mill to produce particles essentially all under 5 microns in size.

Example 10

Oil Suspension

| | |
|---|---|
| Compound of Formula I | 17.5% |
| Compound of Formula II | 17.5% |
| blend of polyalcohol carboxylic esters and oil soluble petroleum sulfonates | 6% |
| xylene | 59% |

The ingredients are combined and ground together in a sand mill to produce particles essentially all below 3 microns. The product can be used directly, extended with oils, or emulsified in water.

Example 11

Oil Suspension

| | |
|---|---|
| Compound of Formula I | 11.1% |
| Compound of Formula II | 11.1% |
| Compound of Formula III | 2.8% |
| polyoxyethylene sorbitol hexaoleate | 5% |
| highly aliphatic hydrocarbon oil | 70% |

The ingredients are ground together in a sand mill until the solid particles have been reduced to under about 5 microns. The resulting thick suspension may be applied directly, but preferably after being extended with oils or emulsified in water.

Example 12

Aqueous Suspension

| | |
|---|---|
| Compound of Formula I | 16.7% |
| Compound of Formula III | 8.3% |
| hydrated attapulgite | 3% |
| crude calcium ligninsulfonate | 10% |
| sodium dihydrogen phosphate | 0.5% |
| water | 61.5% |

The ingredients are ground together in a ball or roller mill until the solid particles have been reduced to diameters under 10 microns.

## Example 13

Wettable Powder

| | |
|---|---|
| Compound of Formula I | 20% |
| Compound of Formula II | 20% |
| dioctyl sodium sulfosuccinate | 1.5% |
| sodium ligninsulfonate | 3% |
| low viscosity methyl cellulose | 1.5% |
| attapulgite | 54% |

The ingredients are thoroughly blended, passed through an air mill, to produce an average particle size under 15 microns, reblended, and sifted through a U.S.S. No. 50 sieve (0.3 mm opening) before packaging. All compounds of the invention may be formulated in the same manner.

## Example 14

Granule

| | |
|---|---|
| wettable powder of Example 13 | 15% |
| gypsum | 69% |
| potassium sulfate | 16% |

The ingredients are blended in a rotating mixer and water sprayed on to accomplish granulation. When most of the material has reached the desired range of 1.0 to 0.42 cm (U.S.S. #18 to 40 sieves), the granules are removed, dried, and screened. Oversized material is crushed to produce additional material in the desired range. These granules contain % active ingredient.

## Example 15

Wettable Powder

| | |
|---|---|
| Compound of Formula I | 22.2% |
| Compound of Formula II | 22.2% |
| Compound of Formula III | 5.6% |
| sodium alkylnaphthalenesulfonate | 2% |
| low viscosity methyl cellulose | 2% |
| diatomaceous earth | 46% |

The ingredients are blended, coarsely hammer-milled and the air milled to produce particles of active essentially all below 10 microns in diameter. The product is reblended before packaging.

Example 16

Extruded Pellet

| | |
|---|---|
| Compound of Formula I | 16.7% |
| Compound of Formula III | 8.3% |
| anhydrous sodium sulfate | 10% |
| crude calcium ligninsulfonate | 5% |
| sodium alkylnaphthalenesulfonate | 1% |
| calcium/magnesium bentonite | 59% |

The ingredients are blended, hammer-milled and then moistened with about 12% water. The mixture is extruded as cylinders about 3 mm diameter which are cut to produce pellets about 3 mm long. These may be used directly after drying, or the dried pellets may be crushed to pass a U.S.S. No. 20 sieve (0.84 mm openings). The granules held on a U.S.S. No. 40 sieve (0.42 mm openings) may be packaged for use and the fines recycled.

Example 17

Wettable Powder

| | |
|---|---|
| Compound of Formula I | 40% |
| Compound of Formula II | 40% |
| sodium alkylnaphthalenesulfonate | 2% |
| sodium ligninsulfonate | 2% |
| synthetic amorphous silica | 3% |
| kaolinite | 13% |

The ingredients are blended and then ground in a hammermill to produce particles with an average particle size less than 25 microns in diameter. The material is reblended and sifted through a U.S.S. No. 50 sieve (0.3 mm opening) before being packaged.

## Example 18

High Strength Concentrate

| | |
|---|---|
| Compound of Formula I | 43.8% |
| Compound of Formula II | 43.8% |
| Compound of Formula III | 10.9% |
| silica aerogel | 0.5% |
| synthetic amorphous fine silica | 1.0% |

The ingredients are blended and ground in a hammer mill to produce a high strength concentrate essentially all passing a U.S.S. No. 50 sieve (0.3 mm openings). This material may then be formulated in a variety of ways.

## Example 19

Solution

| | |
|---|---|
| Sodium salt of the Compound of Formula I | 2.5% |
| Sodium salt of the Compound of Formula II | 2.5% |
| water | 95% |

The salts are added directly to the water with stirring to produce the solution, which may then be packaged for use.

Utility

Test results indicate that the compound of Formula I and its mixtures are highly active preemergent or postemergent herbicides or plant growth regulants. This compound and its mixtures have utility for broad-spectrum preemergence and, in particular, postemergence weed control in areas where control of vegetation is desired, such as around fuel storage tanks, industrial storage areas, parking lots, drive-in theaters, around billboards, highways, and railroad structures. The compound of Formula I and mixtures with appropriate herbicides have utility for selective weed control in plantation crops, crops from the Solanaceae family such as tomatoes and potatoes, and crops such as corn and their fallow land. In particular, the compound of Formula I and mixtures with herbicides safe to corn control troublesome broadleaf and, in particular grass weeds in corn (maize) both pre- and postemergence at rates that cause no significant crop damage. Also, the compound of Formula I and mixtures with herbicides safe to potatoes and tomatoes control weeds at rates that cause no significant injury to potato (*Solanum tuberosum*) and tomato (*Lycopersicon esculentum*). The compound of Formula I and mixtures of this compound are particularly useful to control such problem weeds as foxtail (*Setaria* spp.) fall panicum (*Panicum dichotomiflorum*) barnyardgrass (*Echinochloa crus-galli*) johnsongrass (*Sorghum halepense*) and shattercane (*Sorghum bicolor*) They can be used preemergence or postemergence and are most effective when applied postemergence to young weeds. They are also effective on certain broadleaf weeds such as lambsquarters (*Chenopodium album*) pigweed (*Amaranthus* spp.) and velvet leaf (*Abutilon theophrasti*).

Alternatively, the compound of Formula I and its mixtures are useful to modify plant growth and as citrus abscission agents.

Rates of application for the compound of Formula I and its herbicidal mixtures are determined by a number of factors including their use as plant growth modifiers or as herbicides, crop species involved, types of weeds to be controlled, weather and climate, formulations selected, mode of application, amount of foliage present, etc. In general terms, the subject compounds should be applied at levels of around 0.001 to 20 kg/ha, the lower rates being suggested for use on lighter soils and/or those having a low organic matter content, for plant growth modification, or for situations where only short-term persistence is required.

The compound of Formula I may be used in combination with any other commercial herbicide examples of which are those of the triazine, triazole, imidazolinone, uracil, urea, amide, diphenylether, cineole, carbamate and bipyridylium types. The compound of Formula I is particularly useful in combination with the following herbicides:

| Common Name | Chemical Name |
|---|---|
| acetochlor | 2-chloro-N(ethoxymethyl)-6'-ethyl-o-acetotoluide |
| alachlor | 2-chloro-2',6'-diethyl-N-(methoxymethyl)-acetanilide |
| atrazine | 2-chloro-4-(ethylamino)-6-isopropylamino)-s-triazine |
| butylate | S-ethyl-diisobutylthiocarbamate |
| cyanazine | 2-[[4-chloro-6-(ethylamino)-s-triazin-2-yl]amino]-2-methylpropionitrile |
| dicamba | 3,6-dichloro-o-anisic acid |
| EPTC | S-ethyl dipropylthiocarbamate |
| linuron | 3-(3,4-dichlorophenyl)-1-methoxy-1-methylurea |
| metolachlor | 2-chloro-N-(2-ethyl-6-methylphenyl)-N-(2-methoxy-1-methylethyl)acetamide |
| metribuzin | 4-amino-6-tert-butyl-3-(methylthio)-as-triazine-5(4H)-one |
| tridiphane | 2-(3,5-dichlorophenyl)-2-(2,2,2-trichloroethyl)oxirane |

| Common Name | Chemical Name |
|---|---|
| 2,4-D | (2,4-dichlorophenoxy)acetic acid |
| bromoxynil | 3,5-dibromo-4-hydroxyphenylcyanide |
| paraquat | 1,1'-dimethyl-4,4-bipyridinium ion |
| glyphosate | N-(phosphonomethyl)glycine |
| DCPA | dimethyl tetrachloroterephthalate |
| dalapon | 2,2-dichloropropionic acid |
| dinoseb | 2-(1-methylpropyl)-4,6-dinitro-phenol |
| diphenamid | N,N-dimethyl-2,2-diphenylacetamide |
| pendimethalin | N-(1-ethylpropyl)-3,4 dimethyl-2,6 dinitrobenamine |
| oryzalin | 3,5-dinitro-N,N-dipropylsulfanil-amide |
| gluphosinate | ammonium 4-[hydroxy(methyl) phosphinoyl]-DL-homoalaninate |
| trifluralin | α,α,α-trifluro-2,6-dinitro-N-N-dipropyl-p-toluidine |
| chloramben | 3-amino-2,5-dichlorobenzoic acid |

| Common Name | Chemical Name |
|---|---|
| napropamide | 2-(α-naphthoxy)-N,-N-diethyl-propionamide |
| pebulate | S-propyl butylethylthiocarbamate |
| pyridate | 6-chloro-3-phenylpyridazin-4-yl S-octyl thiocarbonate |
| chlorpropham | isopropyl m-chlorocarbanilate |
| bensulide | S-(O,O-diisopropyl phosphoro-dithioate) ester of N-(2-mercaptoethyl)benzenesulfon-amide |
| Harmony® | methyl 3-[[[[(4-methoxy-6-methyl-1,3,5-triazin-2-yl)-amino]carbonyl]amino]sulfonyl]-2-thiophenecarboxylate (Compound of Formula III) |
| Cinch® | 1-methyl-4-(1-methylethyl)-2-exo-[(2-methylphenyl)-methoxy]-7-oxabicyclo[2.2.1]heptane |
| Beacon® | 2-[[[[[4,6-bis(difluoromethoxy)-pyrimidin-2-yl]amino]carbonyl]-amino]sulfonyl]benzoic acid, methyl ester |

| Trade Name | Chemical Name |
|---|---|
| Accent® | 2-[[[[(4,6-dimethoxy-2-pyrimidinyl)amino]carbonyl]-amino]sulfonyl]-N,N-dimethyl-3-pyridinecarboxamide (Compound of Formula II) |

Combinations of the compound of Formula I with the compound of Formula II and with the compound of Formula III, in either binary or ternary mixtures, are especially useful for the control of unwanted vegetation in maize (corn). These mixtures offer a combination of better weed control, better crop safety and/or greater rotational flexibility than provided by each of the active ingredients alone.

Particularly useful are ternary mixtures comprised of the compounds of Formulae I, II and III in ratios varying between about 4:1:1 and about 5:5:1 by weight, respectively. Preferred is a mixture of these three active sulfonylurea ingredients in a weight ratio of about 4:4:1.

Also, particularly useful are binary mixtures comprised of the compounds of Formulae I and III in ratios varying between about 3:1 and about 1:1 by weight, respectively. Preferred is a mixture of these two active sulfonylurea ingredients in a weight ratio of about 2:1.

Additionally, particularly useful are binary mixtures comprised of the compounds of Formulae I and II in ratios varying between about 2:1 and about 1:2 by weight, respectively. Preferred is a mixture of these two active sulfonylurea ingredients in a weight ratio of about 1:1.

These mixtures are typically applied at a total combined application rate for all of the sulfonylurea active ingredients of between about 2 and about 100 g/ha. Preferred is a range of about 20 to about 40 g/ha, and most preferred is a total application rate of about 30 g/ha. One skilled in the art can easily determine the application rate necessary for the desired level of weed control.

Herbicidal properties of the subject compounds were discovered in greenhouse studies. The test procedure and results follow.

TEST A

Seeds of barnyardgrass (*Echinochloa crus-galli*), cocklebur (*Xanthium pensylvanicum*), corn (*Zea mays*), crabgrass (*Digitaria* spp.), fall panicum (*Panicum dichotomiflorum*), giant foxtail (*Setaria faberi*) green foxtail (*Setaria viridis*), jimsonweed *(Datura stramonium*), johnsongrass (*Sorghum halepense*), lambsquarters (*Chenopodium album*) morningglory (*Ipomoea hederacea*), pigweed (*Amaranthus retroflexus*), smartweed (*Polygonum persicaria*), sorghum (*Sorghum bicolor*), soybean (*Glycine max*), and velvet leaf (*Abutilon theophrasti*) and purple nutsedge (*Cyperus rotundus*) tubers were planted into a sandy loam soil with approximately one percent organic matter. These seeds and tubers were allowed to germinate and the plants were allowed to grow in a greenhouse environment for approximately eight to fifteen days before the plants were treated postemergence with the test compounds. Plants ranged in height from four to twenty-five cm tall (two to four leaf stage) when the test compounds were applied. All test compounds were dissolved in a non-phytotoxic solvent and applied postemergence to the plants.

Before the postemergence treatments were applied, the soil surface of an additional pot containing corn (Corn, Perlite) was covered with the absorbent, perlite. This procedure was done for each application rate of each test compound or mixture of compounds. After application of the test chemicals, the perlite was removed from the soil surface to remove chemical sorbed onto the perlite. This procedure therefore allowed only that portion of chemical sorbed onto the plant foliage to cause corn injury response.

After the test compounds or mixture of compounds were applied, treated plants and controls were placed in the greenhouse and maintained in a greenhouse environment for approximately 24 days. Visual injury response ratings of growth for all treated plants, when compared to plant growth of the untreated control species, were then recorded. Plant response ratings, summarized in Table A, are based on a scale of 0 to 100 where 0 is no effect and 100 is complete control.

For this test, each of the three compounds were sprayed alone to demonstrate the herbicidal activity of each compound. The compounds were also combined in a 4:4:1 mixture consisting of 4 parts compound of Formula I, 4 parts compound of Formula II, and 1 part compound of Formula III. Note in particular the broad spectrum broadleaf and especially grass weed control at application rates that cause no significant corn injury for this mixture.

Table A

Compound I

| RATE (g/ha) POSTEMERGENCE | 64 | 32 | 16 | 8 | 4 | 2 | 1 |
|---|---|---|---|---|---|---|---|
| Barnyardgrass | 100 | 100 | 100 | 100 | 100 | 90 | 40 |
| Cocklebur | 100 | 100 | 95 | 85 | 60 | 25 | 20 |
| Corn | 40 | 20 | 0 | 0 | 0 | 0 | 0 |
| Corn (Perlite) | 25 | 0 | 0 | 0 | 0 | 0 | 0 |
| Crabgrass | 100 | 95 | 85 | 70 | 40 | 0 | 0 |
| Fall Panicum | 100 | 100 | 100 | 100 | 90 | 60 | 30 |
| Giant foxtail | 100 | 100 | 100 | 100 | 95 | 65 | 30 |
| Green foxtail | 100 | 100 | 100 | 100 | 95 | 65 | 35 |
| Jimsonweed | 50 | 35 | 25 | 0 | 0 | 0 | 0 |
| Johnsongrass | 100 | 100 | 100 | 100 | 100 | 95 | 60 |
| Lambsquarters | 100 | 100 | 95 | 90 | 70 | 60 | 30 |
| Morningglory | 100 | 100 | 90 | 85 | 65 | 25 | 0 |
| Nutsedge | 100 | 100 | 95 | 80 | 50 | 20 | 0 |
| Pigweed | 100 | 100 | 100 | 100 | 100 | 95 | 65 |
| Smartweed | 100 | 100 | 90 | 90 | 70 | 55 | 25 |
| Sorghum | 100 | 100 | 100 | 100 | 100 | 75 | 40 |
| Soybean | 100 | 100 | 100 | 100 | 100 | 85 | 55 |
| Velvetleaf | 100 | 100 | 95 | 80 | 55 | 20 | 0 |

Table A

Compound II

| RATE (g/ha) POSTEMERGENCE | 125 | 64 | 32 | 16 | 8 | 4 |
|---|---|---|---|---|---|---|
| Barnyardgrass | 100 | 100 | 100 | 100 | 90 | 55 |
| Cocklebur | 100 | 85 | 60 | 35 | 20 | 0 |
| Corn | 0 | 0 | 0 | 0 | 0 | 0 |
| Corn (Perlite) | 0 | 0 | 0 | 0 | 0 | 0 |
| Crabgrass | 95 | 85 | 65 | 25 | 0 | 0 |
| Fall Panicum | 100 | 100 | 100 | 80 | 55 | 25 |
| Giant foxtail | 100 | 100 | 100 | 100 | 85 | 50 |
| Green foxtail | 100 | 100 | 100 | 100 | 85 | 55 |
| Jimsonweed | 100 | 100 | 100 | 95 | 65 | 35 |
| Johnsongrass | 100 | 100 | 100 | 100 | 95 | 70 |
| Lambsquarters | 100 | 100 | 95 | 85 | 45 | 0 |
| Morningglory | 100 | 100 | 90 | 80 | 60 | 35 |
| Nutsedge | 100 | 95 | 80 | 55 | 35 | 0 |
| Pigweed | 100 | 100 | 100 | 100 | 100 | 85 |
| Smartweed | 100 | 100 | 90 | 75 | 60 | 35 |
| Sorghum | 100 | 100 | 100 | 100 | 85 | 65 |
| Soybean | 100 | 85 | 75 | 45 | 35 | 15 |
| Velvetleaf | 95 | 85 | 65 | 45 | 20 | 0 |

Table A

Compound III

| RATE (g/ha) POSTEMERGENCE | 64 | 32 | 16 | 8 | 4 | 2 | 1 |
|---|---|---|---|---|---|---|---|
| Barnyardgrass | 55 | 50 | 20 | 0 | 0 | 0 | 0 |
| Cocklebur | 100 | 100 | 100 | 100 | 100 | 80 | 40 |
| Corn | 60 | 50 | 30 | 0 | 0 | 0 | 0 |
| Corn (Perlite) | 40 | 25 | 10 | 0 | 0 | 0 | 0 |
| Crabgrass | 20 | 0 | 0 | 0 | 0 | 0 | 0 |
| Fall Panicum | 25 | 0 | 0 | 0 | 0 | 0 | 0 |
| Giant foxtail | 40 | 20 | 0 | 0 | 0 | 0 | 0 |
| Green foxtail | 40 | 25 | 0 | 0 | 0 | 0 | 0 |
| Jimsonweed | 100 | 100 | 100 | 100 | 100 | 100 | 60 |
| Johnsongrass | 90 | 80 | 60 | 35 | 20 | 0 | 0 |
| Lambsquarters | 100 | 100 | 100 | 100 | 100 | 100 | 75 |
| Morningglory | 100 | 100 | 100 | 100 | 100 | 85 | 50 |
| Nutsedge | 30 | 0 | 0 | 0 | 0 | 0 | 0 |
| Pigweed | 100 | 100 | 100 | 100 | 100 | 100 | 85 |
| Smartweed | 100 | 100 | 100 | 100 | 100 | 100 | 70 |
| Sorghum | 65 | 50 | 30 | 20 | 0 | 0 | 0 |
| Soybean | 95 | 85 | 60 | 50 | 45 | 40 | 25 |
| Velvetleaf | 100 | 100 | 100 | 100 | 100 | 85 | 55 |

Table A

Mixture consisting of 4 parts Compound I, 4 parts Compound II, and 1 part Compound III

| RATE (g/ha) POSTEMERGENCE | 64 | 32 | 16 | 8 | 4 | 2 |
|---|---|---|---|---|---|---|
| Barnyardgrass | 100 | 100 | 100 | 100 | 90 | 65 |
| Cocklebur | 100 | 100 | 75 | 55 | 20 | 0 |
| Corn | 45 | 20 | 0 | 0 | 0 | 0 |
| Corn (Perlite) | 20 | 0 | 0 | 0 | 0 | 0 |
| Crabgrass | 100 | 85 | 60 | 30 | 0 | 0 |
| Fall Panicum | 100 | 100 | 95 | 70 | 50 | 30 |
| Giant foxtail | 100 | 100 | 95 | 95 | 75 | 50 |
| Green foxtail | 100 | 100 | 100 | 95 | 85 | 65 |
| Jimsonweed | 100 | 100 | 95 | 65 | 50 | 25 |
| Johnsongrass | 100 | 100 | 100 | 100 | 100 | 80 |
| Lambsquarters | 100 | 100 | 100 | 80 | 60 | 30 |
| Morningglory | 100 | 100 | 100 | 90 | 65 | 20 |
| Nutsedge | 100 | 95 | 75 | 55 | 25 | 0 |
| Pigweed | 100 | 100 | 100 | 100 | 100 | 90 |
| Smartweed | 100 | 100 | 100 | 80 | 55 | 25 |
| Sorghum | 100 | 100 | 100 | 100 | 95 | 65 |
| Soybean | 100 | 100 | 100 | 70 | 65 | 40 |
| Velvetleaf | 100 | 90 | 70 | 50 | 25 | 0 |

## Claims

1. A herbicidal mixture of compounds consisting essentially of an effective amount of (N-[[(4,6-dimethoxy-2-pyrimidinyl)amino]carbonyl] -3-(ethylsulfonyl)-2-pyridinesulfonamide I
and at least one compound selected from
(2-[[[[(4,6-dimethoxy-2-pyrimidinyl)amino]-carbonyl] amino]sulfonyl]-N,N-dimethyl-3-pyridinecarboxamide II
and
(methyl 3-[[[[(4-methoxy-6-methyl-1,3,5-triazin-2-yl)-amino]carbonyl]amino]sulfonyl]-2-thiophenecarboxylate III
and their agriculturally suitable salts.

2. A mixture of Claim 1 wherein the mixture of the compound of Formula I with the compound of Formula II are in about a 2 : 1 to 1 : 2 ratio by weight, respectively.

3. A mixture of Claim 2 wherein the weight ratio of compounds present is about 1 : 1, respectively.

4. A mixture of Claim 1 wherein the mixture of the compound of Formula I with the compound of Formula II and the compound of Formula III is about 5 : 5 : 1 to 4 : 1 : 1 ratio by weight, respectively.

5. The mixture of Claim 3, wherein the weight ratio of compounds present is about 4 : 4 : 1, respectively.

6. A mixture of Claim 1 wherein the mixture of the compound of Formula I with the compound of Formula III is about a 3 : 1 to 1 : 1 ratio by weight, respectively.

7. A mixture of Claim 6, wherein the weight ratio of compounds present is about 2 : 1, respectively.

8. A composition suitable for controlling the growth of undesired vegetation which comprises an effective amount of a mixture selected from the mixtures of Claims 1-7 and at least one of the following: surfactant, solid diluent or liquid diluent.

9. A method for controlling the growth of undesired vegetation which comprises applying to the locus to be protected an effective amount of a mixture selected from the mixtures of Claims 1-7.

10. The method of Claim 7 wherein the locus is corn.

European Patent Office

# EUROPEAN SEARCH REPORT

Application Number

EP 89 30 4376

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,P D | WO-A-8 804 297 (DU PONT) * Page 21, lines 11-12; page 174, lines 1-17; page 175, lines 10-16; page 176, lines 30-33 * --- | 1,6-10 | A 01 N 47/36 // (A 01 N 47/36 A 01 N 47:36 ) |
| A | EP-A-0 237 292 (DU PONT) * Page 7, lines 6-13; page 49, lines 27-30; page 50, lines 25-28 * & US-A-4 789 393 (Cat. D) & US-A-4 786 734 (Cat. D) ----- | 1,4-5,8 -10 | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 04-08-1989 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document